# EUROPEAN PATENT APPLICATION

(11) **EP 4 030 077 A1**
(43) Date of publication of application: **20.07.2022**
(21) Application number: 21151851.9
(22) Date of filing: 15.01.2021
(51) Int. Cl.: F16F 9/32, F16F 9/36, F16F 7/09, F16F 1/34

(54) **DAMPER ASSEMBLY AND HYDRAULIC SHOCK ABSORBER COMPRISING THE SAME**

(71) Applicant: Öhlins Racing AB, 194 27 Upplands Väsby (SE)
(72) Inventor: HANSSON, Erik, 194 27 Upplands Väsby (SE)
(74) Representative: AWA Sweden AB

(57) **Abstract**

The present invention relates to a damper assembly for a hydraulic shock absorber, the damper assembly comprising a damping cylinder and a piston assembly being arranged in said damping cylinder and axially movable with respect thereto. The piston assembly comprises a piston having an outer cylindrical surface comprising an annular groove; a friction element arranged in said annular groove of said piston; and a resilient element arranged inside said annular groove between an inner wall of said annular groove and said friction element and arranged to force the friction element towards an inner surface of the damping cylinder, wherein said friction element is made from metal and comprises a coating made of a low friction material. The damper assembly provides improved durability of the damping capacity.

## Description

### TECHNICAL FIELD

The present specification generally relates to the field of vehicle shock absorbers and particularly to a damper assembly and a hydraulic shock absorber comprising such a damper assembly.

### TECHNICAL BACKGROUND

Hydraulic shock absorbers generally comprise a cylinder filled with hydraulic oil and a piston mounted in the cylinder which moves up and down within the cylinder as the shock absorber is compressed and extended. The piston comprises a piston ring which guides the piston within the cylinder and provides a seal between the piston and the cylinder. In some shock absorbers, an additional function of the piston ring is to provide friction between the piston and the cylinder. This friction contributes, in addition to the hydraulic damping action, to the damping by providing a hysteresis free damping, especially at low velocities, i.e. an immediate damping force, noticeable for example in curves or at landing after a jump in, for example, motocross driving. Such an event can be referred to as a disruption event of the vehicle, as it causes the chassis of the vehicle to move in a vertical direction with respect to the ground. In these events, it is of interest to regain stability of the chassis quickly in order for the driver to focus on the next disruption on the track. Due to the friction provided by the piston ring, whenever the kinetic energy that causes the chassis to move in a vertical direction is smaller than the friction, the vertical movement of the chassis of the vehicle carrying the shock absorber is stopped. The addition of the friction generated by the piston ring to the hydraulic damping may lead to a shift in the position of the chassis when it has come to a stop after a disruption event. However, a small shift in the position of the chassis is preferable over a longer damping time, particularly for motor sport vehicles.

Currently, piston rings for hydraulic shock absorbers generally comprise a friction ring made of a polymer material, typically PTFE, which is mounted in an annular groove provided on the outer surface of the piston. When the piston is mounted in a damping cylinder, the friction ring is biased towards the surface of the cylinder by means of one or more O-rings arranged in the annular groove between the friction ring and the piston. Although proven effective for generating the friction referred to above, these known piston rings experience performance reduction over time as the polymer material of the friction ring and O-ring degrades due to the heat generated in these parts during use. The degradation of the piston ring parts is manifested by a size reduction of the same leading to less friction. Consequently, the immediate damping force generated by the friction between the piston ring and the cylinder is reduced and the damping capacity of the shock absorber, particularly at low velocity, is noticeably decreased.

### SUMMARY

The above-mentioned drawbacks are overcome by the present disclosure according to the independent claims. Preferred embodiments are set forth in the dependent claims.

It would be advantageous to improve the damping capacity of hydraulic shock absorbers over time.

To better address this concern, in accordance with one aspect of the disclosure, there is provided a damper assembly for a hydraulic shock absorber, the damper assembly comprising a damping cylinder and a piston assembly being arranged in the damping cylinder and axially movable with respect thereto. The piston assembly comprises a piston having an outer cylindrical surface comprising an annular groove, a friction element arranged in the annular groove of the piston and a resilient element arranged inside the annular groove between an inner wall of the annular groove and the friction element and arranged to force the friction element towards an inner surface of the damping cylinder. The friction element is made from metal and comprises a coating made of a low friction material.

The disclosure is based on the insight that the damper assembly provided, comprising a friction element made of metal having a low friction material coating and a resilient element arranged in the annular groove of the piston, provides increased performance for hydraulic shock absorbers particularly noticeable at low velocities. As opposed to friction elements made of a polymer material, the friction element made of metal is more resistant to high temperature induced wear, e.g. dimensional changes during use, which is advantageous in that it maintains its shape even when the temperature increases during use. Together with the resilient element forcing the friction element towards the inner surface of the damping cylinder, the friction element made of metal provides a constant frictional force against the inner surface of the damping cylinder and, thereby, an increased performance of the damper assembly. The coating made of a low friction material provides a low friction between the friction element and the inner wall of the damping cylinder, which is advantageous in that it reduces wear of the friction element and the damping cylinder due to the relative axial movement of the piston assembly with respect to the damping cylinder during use of the damper assembly.

Therefore, the damper assembly may advantageously be used in a shock absorber for a vehicle in order to increase durability and reduce the need for service of the same. Previous solutions require replacement of the friction element after few hours of operating time and well before maintenance of other parts of the shock absorber is due. The solution in accordance with the present invention, on the other hand, ensures consistent friction properties during the entire maintenance interval of the shock absorber. Thus, the friction element according to the invention can be used with reliable performance until maintenance of the rest of the shock absorber is due. Additional further developments will be apparent from the following aspects and embodiments of the disclosure, as well as from the appended claims.

In accordance with an embodiment, the resilient element is configured to exert a radial force on the friction element when the piston assembly is arranged in the damping cylinder. This provides a direct force from the resilient element on the friction element such that the latter is pressed against the inner surface of the damping cylinder and, thereby, generates a frictional force acting against the axial movement of the piston assembly with respect to the damping cylinder.

In accordance with an embodiment, the resilient element is plastically deformed when the piston assembly is first arranged in the damping cylinder. By plastically deforming, the resilient element can adapt to the particular chain of tolerances which are present in the damper assembly to provide a predetermined frictional force to be exerted on the damping cylinder through the friction element. The frictional force exerted on the damping cylinder by the resilient element through the friction element is highly dependent on the level of prestress of the resilient element. The level of prestress of the resilient element is, in turn, affected by the width and depth of the annular groove, the initial shape and dimensions of the resilient element, the thickness of the friction element, and the inner diameter of the damping cylinder. Thus, by providing a solution where the resilient element is arranged to plastically deform when the piston assembly is first arranged in the damping cylinder, the resilient element can adapt to the particular dimensions of each of the components of the damper assembly into which it is installed. Thereby, minimal scatter in the level of prestress of the resilient element is achieved in the production of the damper assembly, which is advantageous.

In accordance with an embodiment, the resilient element is made from metal. This provides resistance and durability of the damper assembly, since the metal resilient element does not adapt a more compact shape upon heating to the temperatures experienced in the damper assembly during use. Thereby, it provides constant pressure against the friction element which thus is pressed with the desired force against the inner wall of the damping cylinder.

In accordance with an embodiment, the resilient element is made of a steel which plastically deforms when the piston assembly is first arranged in the damping cylinder and which presents elastic spring back when the piston assembly is removed from the damping cylinder. Plastically deforming the resilient element involves inducing stress beyond the yield strength of the material of the resilient element, whereby it plastically deforms. When the load is removed, i.e. the piston assembly is removed from the damping cylinder, elastic strain of the material is recovered leading to a partial recovery of the deformation of the resilient element. This is referred to as spring back. Thus, when the piston assembly is first arranged in the damping cylinder, the friction element is pressed into the annular groove of the piston by the inner wall of the damping cylinder, whereby the friction element presses on the resilient element such that it is stressed beyond its yield strength and a permanent, i.e. plastic, deformation is induced. The plastic deformation induced depends on the particular dimensions of the components of the damper assembly, e.g. the width and depth of the groove, the inner diameter of the damping cylinder, and the dimensions, such as thickness, of the friction element. The resilient element remains stressed until the piston assembly is removed from the damping cylinder, i.e. until the load on the resilient element is removed, at which point the resilient element will spring back to a certain extent towards its initial shape. Thereby, the resilient element remains prestressed while arranged in the damping cylinder, providing a constant force against the friction element pressing the same against the inner wall of the damping cylinder. The amount of spring back presented by the resilient element depends on the elastic modulus of the steel. Thus, the level of prestress of the resilient element can be controlled by choosing a steel which plastically deforms under the forces exerted by the damping cylinder on the friction element. Thus, in a comparison between individual resilient elements arranged in a respective shock absorber, the level of prestress will be the same, or at least generally the same. This despite the fact that different chains of tolerances will be present in the shock absorbers.

In accordance with an embodiment, the resilient element comprises a steel strip. The spring rate of the resilient element, which also influences the frictional force exerted by the piston assembly on the damping cylinder, depends on the thickness of the resilient element. The resilient element comprising a steel strip is advantageous in that steel strips can be produced with very precise thicknesses, e.g. by rolling. Thereby, a constant frictional force is provided by the resilient element, acting on the inner wall of the damping cylinder. The thickness of the steel strip can further be adapted to the spring rate needed for the damper assembly. According to an exemplary embodiment, the thickness of the steel strip is between 0.1 and 0.5 mm, such as for example 0.3 mm.

In accordance with an embodiment, the steel strip is a curved steel strip which, when the piston assembly is first mounted in the damping cylinder, plastically deforms adopting a flattened shape. In this embodiment, the curved steel strip is arranged in the annular groove of the piston assembly with its convex side towards the friction element, such that when first mounted in the damping cylinder, the friction element presses down on the curved steel strip whereby it adopts a flattened shape. This is advantageous in that it provides for an effective production of the resilient element having the intended properties. It further facilitates mounting of the damper assembly.

In accordance with an embodiment, the annular groove has a width that is equal to or slightly larger than the maximum width of the steel strip. This allows the resilient element to plasticize, by flattening, to the necessary extent depending on the particular chain of tolerances of the damper assembly into which it is installed.

In accordance with an embodiment, the steel strip comprises a central rib protruding in a direction towards the friction element. According to this embodiment, the annular groove comprises stepped opposing side surfaces such that an outer portion of the groove has a width that is larger than an inner portion of the groove, and wherein end portions of the steel strip comprising the central rib rest on the stepped side surfaces. When the piston assembly is first arranged in the damping cylinder, the central rib will be pressed further into the annular groove causing the steel strip to bend towards the inner wall of the annular groove as it plasticizes, thereby providing the necessary prestressed resilient element.

In accordance with an embodiment, the low friction material of the coating is polytetrafluoroethylene (PTFE). Other low friction materials can also be used as coating for the friction element within the scope of this disclosure.

In accordance with an embodiment, the piston assembly further comprises a sealing member arranged in a second annular groove in the surface of the piston, at either side of the annular groove comprising the friction element and the resilient element. This provides sealing between the piston and the damping cylinder.

In accordance with a second aspect of the present disclosure, there is provided a hydraulic shock absorber comprising a damper assembly as disclosed herein. The hydraulic shock absorber can be used to advantage in any vehicle. As an example, the hydraulic shock absorber is used in the front fork or rear shock absorber of a motorbike, such as a motocross. Other exemplary uses of the hydraulic shock absorber are in a four-wheeled vehicle or in bicycles.

In accordance with a third aspect of the present disclosure, there is provided a method for assembling a damper assembly comprising a damping cylinder and a piston assembly, the piston assembly comprising a piston having an outer cylindrical surface comprising an annular groove, a friction element made from metal comprising a coating made of a low friction element, and a resilient element. The method comprises the steps of arranging the resilient element in the annular groove of the piston such that at least a portion of the resilient element is in contact with an inner wall of the groove, arranging the friction element in the annular groove, whereby a first side of the friction element at least partially is in contact with the resilient element and a second, opposing, side of the friction element protrudes from the outer cylindrical surface of the piston, thereby forming the piston assembly, and inserting the piston assembly into the damping cylinder, wherein the step of inserting the piston assembly into the damping cylinder causes the resilient element to plastically deform.

This allows for an efficient mounting of a damper assembly with constant damping performance over time. By plastically deforming the resilient element when first arranging the piston assembly in the damping cylinder, the dependency on the dimensions of the different parts of the damper assembly for the frictional force exerted on the damping cylinder by the friction element is minimized. Thereby, the frictional force provided for the damper assembly is predeterminable. The friction element, being made from metal, is further prevented from dimensional changes during use, providing a constant frictional force exerted on the inner wall of the damping cylinder during use of the damper assembly.

In accordance with an embodiment, the step of inserting the piston assembly into the damping cylinder causes the friction element to be pressed further into the annular groove and thereby exerting a force on the resilient element, by which force the resilient element plastically deforms. This provides an efficient method of prestressing the resilient element, for which it is only necessary to insert the piston assembly into the damping cylinder.

In accordance with an embodiment of the method, prior to the step of inserting the piston assembly into the damping cylinder, the resilient element does not exert a force on the friction element. This is advantageous in that the friction element remains in the annular groove and is not forced in a direction outwards thereof by the resilient element until the piston assembly is arranged in the damping cylinder.

### BRIEF DESCRIPTION OF THE DRAWINGS

The disclosure is described in the following illustrative and non-limiting detailed description of exemplary embodiments, with reference to the appended drawings, wherein:
Fig. 1 is a cross sectional view of a damper assembly according to an embodiment of the present disclosure;
Fig. 2 is a perspective view of a piston assembly according to an embodiment of the disclosure;
Figs. 3a-b are radial cross-sectional views of a piston assembly before and after being first arranged in a damping cylinder to provide a damper assembly according to an embodiment of the disclosure;
Figs. 4a-b are radial cross-sectional views of piston assembly before and after being first arranged in a damping cylinder to provide a damper assembly according to another embodiment of the disclosure; and
Fig. 5 shows damping curves with position as a function of time.

All figures are schematic, not necessarily to scale, and generally only show parts which are necessary in order to elucidate the disclosure, wherein other parts may be omitted or merely suggested. Throughout the figures the same reference signs designate the same, or essentially the same features.

### DESCRIPTION OF EMBODIMENTS

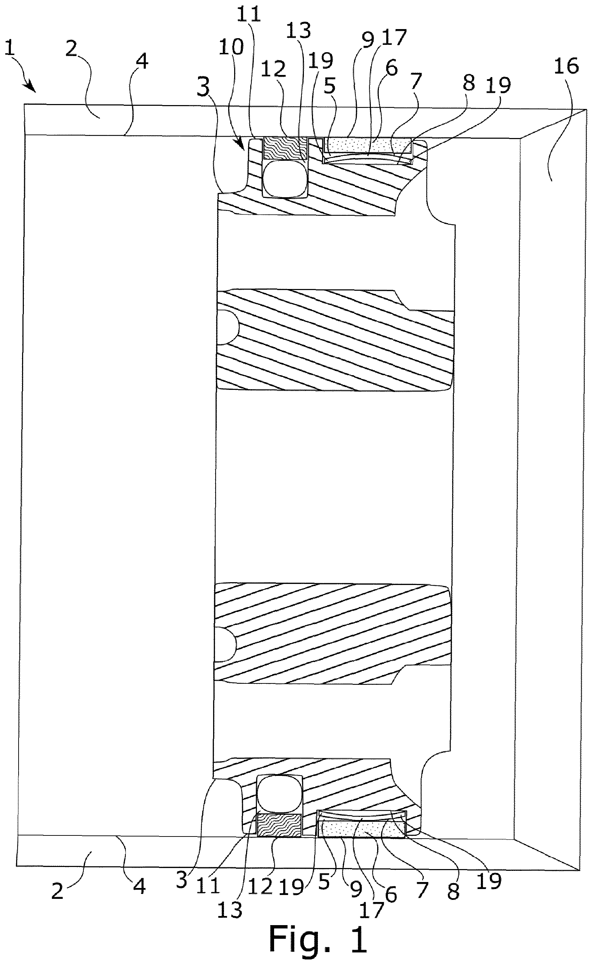

Figure 1 shows a damper assembly 1 comprising a damping cylinder 2 and a piston assembly 10. The damping cylinder 2, a portion of which is shown in the figure, is cylindrical and comprises an inner surface 4. The piston assembly 10 is arranged in the damping cylinder 2 and is axially movable with respect thereto along the inner surface 4 of the damping cylinder 2.

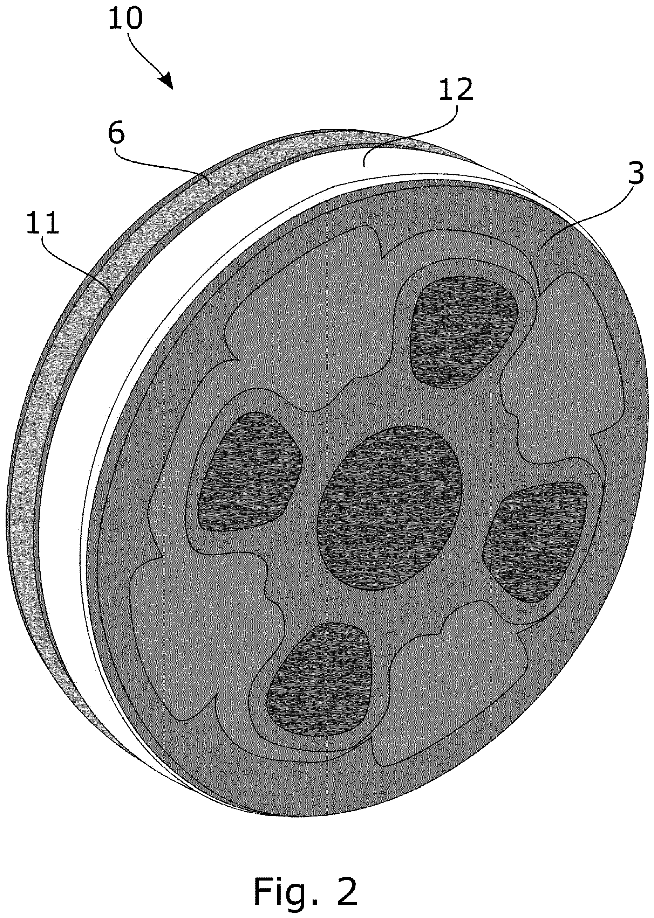

The piston assembly 10 comprises a piston 3 which comprises an outer cylindrical surface 11, see Fig. 2. The outer cylindrical surface 11 comprises an annular groove 5, thus extending around the perimeter of the piston 3. In the exemplifying embodiment shown in Fig. 1, the annular groove 5 is substantially rectangular in cross-section and comprises an inner wall 8. The inner wall 8 may also be referred to as the bottom of the annular groove 5.

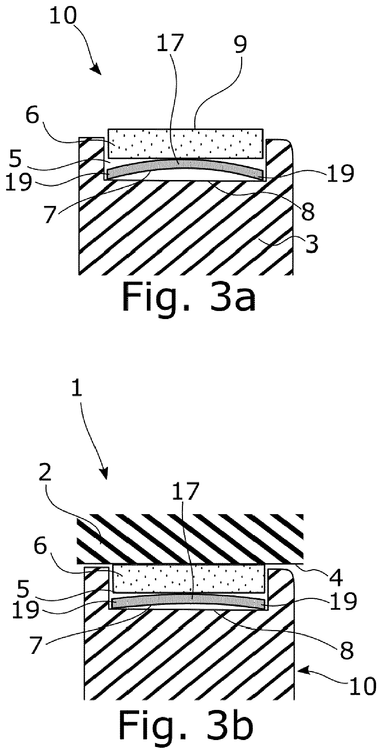

The piston assembly further comprises a resilient element 7 arranged in the annular groove 5. The resilient element 7 is arranged such that it is at least partially in contact with the inner wall 8 of the annular groove 5. In the shown embodiment, the resilient element 7 is slightly curved and end portions 19 of the resilient element 7 are supported by the inner wall 8 of the annular groove 5. The width of the groove 5 is here slightly larger than the maximum width of the resilient element 7. This allows the resilient element 7 to plastically deform inside the annular groove 5 when the piston assembly 10 is first arranged in the damping cylinder 2. In the shown embodiment, the plastic deformation of the resilient element 7 involves flattening the curved shape of the same. This will be further described with respect to Figs. 3a-b.

The piston assembly 10 further comprises a friction element 6 arranged in the annular groove 5 of the piston 3. The friction element 6 is arranged in the annular groove 5 radially outwards of the resilient element 7. That is, the resilient element 7 is arranged between the inner wall 8 of the annular groove 5 and the friction element 6. The friction element is made from metal, such as steel, and comprises a coating 9 made of a low friction material. An example of a low friction material that may be used for the coating 9 is polytetrafluoroethylene (PTFE). Other low friction materials may also be used as coating for the friction element 6.

In the exemplifying embodiment shown in Fig. 1, a central portion 17 of the slightly curved friction element 7 is in contact with the friction element 6, such to force the friction element 6 outwards in a radial direction, towards the inner surface 4 of the damping cylinder 2. More particularly, the resilient element 7 is prestressed such to exert a force on the friction element 6 pressing it towards the inner surface 4 of the damping cylinder 2 to provide a frictional force against axial movement of the piston assembly 10 with respect to the damping cylinder 2.

The frictional force provided depends on the spring rate and the level of prestress of the resilient element 7. With the present disclosure, it is possible to control the frictional force to be achieved by, on the one hand, providing the resilient element 7 with a determined constant thickness. The thickness of the resilient element 7 is directly related to the spring rate, so by controlling the thickness of the resilient element 7, the spring rate is predictable. In the embodiment shown in Fig. 1, the resilient element 7 comprises a curved steel strip. Predetermined thicknesses of the steel strip can be obtained with low tolerances by for example rolling.

On the other hand, the frictional force is dependent on the level of prestress of the resilient element 7 when the piston assembly 10 is arranged in the damping cylinder 2 to provide the damper assembly 1. By providing the resilient element 7 in a material that plasticizes under the pressure from the friction element 6 when the piston assembly 10 is first arranged in the damping cylinder 2, such to adapt to the particular dimensions and tolerances of the different parts of the damper assembly 1, e.g. the width and depth of the annular groove 5, the thickness of the friction element 6, and the inner diameter of the damping cylinder 2, the level of prestress of the resilient element 7 is also controlled. More particularly, the level of prestress is here obtained as the radial difference between the outer diameter of the piston assembly 10 and the inner diameter of the damping cylinder. Thereby, the level of prestress as well as the spring rate of the resilient element 7 is predeterminable. Therefore, the frictional force to be provided by the friction element is predictable and predeterminable.

Continuing with reference to Fig. 1, the piston assembly 10 further comprises a sealing member 12 arranged in a second annular groove 13 in the outer cylindrical surface 11 of the piston 3. The second annular groove 13 is arranged at a side of the annular groove 5 comprising the friction element 6 and the resilient element 7. Although showed to the left of the annular groove 5 in the view shown in Fig. 1, the second annular groove 13 may be provided at either side of the annular groove 5 comprising the friction element 6 and the resilient element 7. The sealing member 12 is generally made of a polymer providing low friction against the inner surface 4 of the damping cylinder 2. The sealing member 12 is further generally pressed towards the inner surface 4 of the damping cylinder 2 by an O-ring or a similar spring element. As can be seen in figure 1, the damping cylinder 2 has a tapered end section 16. This facilitates insertion of the piston assembly 10 having the friction element 6 protruding from the cylindrical outer surface of the piston 3 into the damping cylinder 2.

With reference to Fig. 3a, the piston assembly 10 of Fig. 1 is shown prior to being arranged in the damping cylinder 2. As can be seen, the resilient element 7 is curved and has end portions which are supported by the inner wall 8 of the annular groove 5. The central portion 17 of the resilient element 17 is in contact with the friction element 6 such that the friction element 6 is supported thereby in the annular groove 5. Prior to arranging the piston assembly 10 in the annular groove 5, the friction element 6 is only partially arranged in the annular groove 5 and protrudes partially from the outer cylindrical surface 11 of the piston 3.

When arranging the piston assembly 10 in the damping cylinder 2, referring now to Fig. 3b, the friction element 6 is pressed further into the annular groove 5 and, thereby, exerts a force on the resilient element 7. This force causes the curved resilient element 7 to plastically deform, adapting a flattened shape. The material of the resilient element 7 being such that it can plastically deform and, upon removal of the load thereon, present elastic spring back, remains prestressed whenever the piston assembly 10 is arranged in the damping cylinder 2 and thereby forces the friction element 6 radially outwards against the inner surface 4 of the damping cylinder 2. When the piston assembly 10 is removed from the damping cylinder 2, the resilient element 7 presents spring back, i.e. adapts a more curved shape than when under load. However, since the resilient element 7 plastically deformed when the piston assembly 10 was first arranged in the damping cylinder 2, the resilient element 7 maintains a certain degree of deformation.

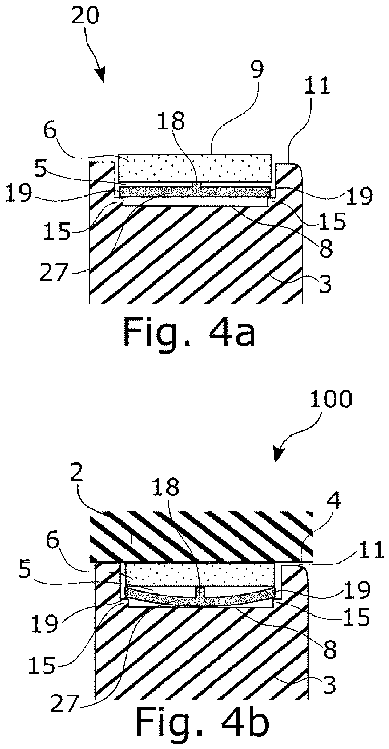

With reference to Figs. 4a-b, another embodiment of the damper assembly 100 is shown. In this exemplifying embodiment, the resilient element 27 is flat prior to arrangement of the piston assembly 20 in the damping cylinder 2. The resilient element 27 further comprises a central rib 18 protruding radially outwards, i.e. in the direction towards the friction element 6, when arranged in the annular groove 5 of the piston 3. The annular groove 5 here comprises stepped opposing side surfaces 15 such that a radially outer portion of the annular groove 5 has a width that is larger than a radially inner portion of the annular groove 5. The end portions 19 of the resilient element 27 are supported by the stepped side surfaces 15. The central rib 18 supports the friction element 6 prior to arranging the piston assembly 20 in the damping cylinder 2, as shown in Fig. 4a.

Referring to Fig. 4b, showing the damper assembly 100, the friction element 6 is pressed further into the annular groove 5 when the piston assembly 20 is arranged in the damping cylinder, causing the resilient element 27 to bend as the central rib 18 is pressed towards the inner wall 8 of the annular groove 5 whereas the end portions 19 of the resilient element 27 rest on the stepped side surfaces 15. Thereby, the resilient element 27 is plastically deformed. However, the material of the resilient element 27 is chosen such that when the piston assembly 20 is removed from the damping cylinder 2, the resilient element 27 presents spring back and, thus, springs back towards a flatter shape. However, some deformation of the resilient element 27 remains. Due to the spring back, the resilient element 27 is stressed when the piston assembly 20 is arranged in the damping cylinder and, thereby, exerts a constant force on the friction element 6, pressing it against the inner surface 4 of the damping cylinder 2 providing friction there between when the piston assembly 20 moves axially with respect to the damping cylinder 2.

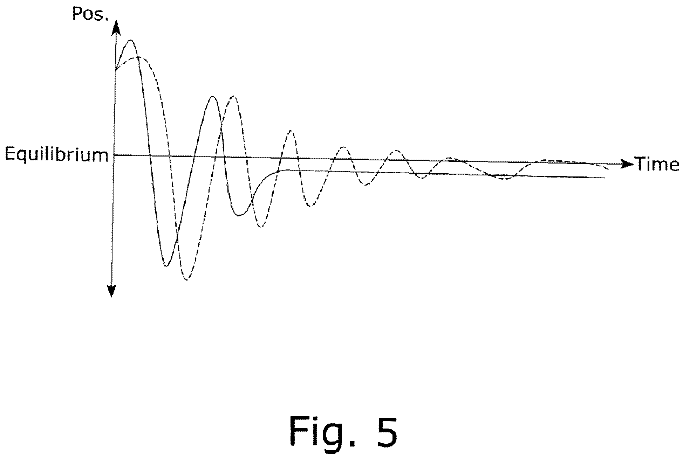

With reference now to Fig. 5, conceptual damping curves of two different shock absorbers are presented where the position of the vehicle chassis to which a shock absorber is connected is shown as a function of time elapsed after a disruption event. The damping curve shown with the dashed line represents that of a vehicle with a shock absorber which does not provide the friction referred to in the background of this disclosure. The curve shows how, after a disruption event forcing the chassis out of its equilibrium position, the chassis is brought back to equilibrium after a certain time of oscillation around the equilibrium position. The damping curve shown with the continuous line, on the other hand, represent that of a vehicle with a shock absorber comprising a damper assembly according to the present disclosure. Due to the damper assembly providing friction as herein described, the oscillation of the chassis is stopped when the kinetic energy of the chassis is lower than the frictional force provided by the damper assembly, leading to a shorter damping time. Although the chassis is not entirely brought back to its equilibrium position in this case, the advantage of a shorter damping time outweighs this drawback, particularly in applications where regaining chassis stability quickly after a disruption event is crucial.

While the disclosure has been illustrated and described in detail in the drawings and foregoing description, such illustration and description are to be considered illustrative or exemplary and not restrictive. The disclosure is not limited to the disclosed embodiments.

For instance, other configurations of the resilient element, annular groove and friction element are possible within the concept of this disclosure. For example, the resilient element may be curved and comprise a central rib protruding radially outwards when mounted in the annular groove of the piston. In another example, the resilient element may be a curved strip comprising a central portion with an acute angle. Further, the piston is shown in the drawings without a piston rod attached thereto. This is done to simplify understanding. It is clear to a skilled person that a piston rod, or similar arrangements, is to be attached in e.g. the central opening of the piston seen in figures 1 and 2. Figures 3a, 3b, 4a and 4b are disclosed without sealing members. However, it is clear to the skilled person that such sealing members, e.g. sealing member 12 in figures 1 and 2, can be applied in these embodiments as well.

Other variations to the disclosed embodiments can be understood and effected by those skilled in the art in practicing the claimed disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A damper assembly for a hydraulic shock absorber, the damper assembly comprising a damping cylinder and a piston assembly being arranged in said damping cylinder and axially movable with respect thereto, the piston assembly comprising:
- a piston having an outer cylindrical surface comprising an annular groove;
- a friction element arranged in said annular groove of said piston; and
- a resilient element arranged inside said annular groove between an inner wall of said annular groove and said friction element and arranged to force the friction element towards an inner surface of the damping cylinder,
wherein
said friction element is made from metal and comprises a coating made of a low friction material.

2. The damper assembly according to claim 1, wherein said resilient element is configured to exert a radial force on said friction element when said piston assembly is arranged in said damping cylinder.

3. The damper assembly according to any one of the preceding claims, wherein said resilient element is plastically deformed when said piston assembly is first arranged in said damping cylinder.

4. The damper assembly according to any one of the preceding claims, wherein said resilient element is made from metal.

5. The damper assembly according to claim 4, wherein said resilient element is made of a steel which plastically deforms when said piston assembly is first arranged in said damping cylinder and which presents elastic spring back when said piston assembly is removed from said damping cylinder.

6. The damper assembly according to any one of the preceding claims, wherein said resilient element comprises a steel strip.

7. The damper assembly according to claim 6, wherein said steel strip is a curved steel strip which, when the piston assembly is first mounted in the damping cylinder, plastically deforms adopting a flattened shape.

8. The damper assembly according to claim 6 or 7, wherein said annular groove has a width that is equal to or slightly larger than the maximum width of said steel strip.

9. The damper assembly according to claim 6, wherein said steel strip comprises a central rib protruding in a direction towards said friction element.

10. The damper assembly according to claim 9, wherein said annular groove comprises stepped opposing side surfaces such that an outer portion of the annular groove has a width that is larger than an inner portion of the annular groove, and wherein end portions of said steel strip comprising said central rib rest on said stepped side surfaces.

11. The damper assembly according to any one of the preceding claims, wherein said low friction material of said coating is polytetrafluoroethylene (PTFE).

12. The damper assembly according to any one of the preceding claims, wherein said piston assembly further comprises a sealing member arranged in a second annular groove in the outer cylindrical surface of said piston, at either side of said annular groove comprising said friction element and said resilient element.

13. A hydraulic shock absorber comprising a damper assembly according to any one of the preceding claims.

14. A method for assembling a damper assembly comprising a damping cylinder and a piston assembly, the piston assembly comprising a piston having an outer cylindrical surface comprising an annular groove, a friction element made from metal comprising a coating made of a low friction element, and a resilient element,
the method comprising the steps of
arranging said resilient element in said annular groove of said piston such that at least a portion of said resilient element is in contact with an inner wall or surface of said groove;
arranging said friction element in said annular groove, whereby a first side of said friction element at least partially is in contact with the resilient element and a second, opposing side of said friction element protrudes from said outer cylindrical surface of said piston, thereby forming said piston assembly; and
inserting said piston assembly into said damping cylinder,
wherein the step of inserting said piston assembly into said damping cylinder causes said resilient element to plastically deform.

15. The method according to claim 14, wherein the step of inserting said piston assembly into said damping cylinder causes said friction element to be pressed further into said annular groove and thereby exerting a force on said resilient element, by which force said resilient element plastically deforms.

16. The method according to claim 14, wherein prior to the step of inserting said piston assembly into said damping cylinder, said resilient element does not exert a force on said friction element.
